# EUROPÄISCHE PATENTSCHRIFT

(11) **EP 1 641 648 B1**
(45) Veröffentlichungstag und Bekanntmachung des Hinweises auf die Patenterteilung: **10.09.2008**
(21) Anmeldenummer: 04762990.2
(22) Anmeldetag: 07.06.2004
(51) Int. Cl.: B60K 17/04, B60K 17/30, F16H 57/02

(54) **KEGELRADGETRIEBE**
BEVEL GEAR DRIVE
ENGRENAGE CONIQUE

(30) Priorität: 03.07.2003 DE 10330032
(43) Veröffentlichungstag der Anmeldung: 05.04.2006
(73) Patentinhaber: ZF FRIEDRICHSHAFEN AG, 88038 Friedrichshafen (DE)
(72) Erfinder: STÜBNER, Frank, 99894 Ernstroda (DE)
(86) Internationale Anmeldenummer: PCT/EP2004/006119
(87) Internationale Veröffentlichungsnummer: WO 2005/002899

(56) Entgegenhaltungen:
- DE-B- 1 263 150
- DE-U- 9 319 187
- US-A- 4 461 367
- US-A- 4 824 264

## Beschreibung

Die vorliegende Erfindung betrifft ein Kegelradgetriebe ohne Abpassscheiben und insbesondere ein Kegelradgetriebe für ein lenkbares Rad eines Flurförderfahrzeuges, wie ein Nieder- oder Hochhubwagen, mit einem einteiligen Gehäuse zur Aufnahme eines Kegelradsatzes, eines Tellerrades und mehrerer Lagerbohrungen für die Lagerung einer Kegelritzelwelle, nach dem Oberbegriff des Anspruchs 1, wie aus der DE-U-9319187 bekannt.

Aus der DE-A-198 26 067 ist ein Getriebe für ein lenkbares Antriebsrad eines Flurförderfahrzeuges bekannt, mit einem um eine vertikale Achse schwenkbar im Fahrzeugrahmen aufnehmbaren Getriebegehäuse, auf dem ein Elektromotor koaxial zur Schwenkachse aufsetzbar ist, mit einer aus einem Ritzel und einem Stirnrad bestehenden Stirnradstufe und mit einer aus einer Ritzelwelle und einem Tellerrad bestehenden zweiten Übersetzungsstufe, wobei das Ritzel der Stirnradstufe drehfest mit der Abtriebswelle des Elektromotors verbindbar ist, das Stirnrad drehfest mit der vertikalen Ritzelwelle der zweiten Übersetzungsstufe verbunden ist und das Tellerrad der zweiten Übersetzungsstufe über eine horizontale Abtriebswelle drehfest mit dem Antriebsrad verbindbar ist.

Das hohe erforderliche Übersetzungsverhältnis der zweiten Übersetzungsstufe bewirkt sehr hohe Reaktionskräfte am Ritzellager beim Beschleunigen oder Abbremsen des Flurförderfahrzeuges. Bei steigenden Belastungsanforderungen wird die maximale Belastbarkeit des Ritzellagers und der Verzahnung erreicht. Um höheren Belastungsanforderungen bei gleichen Außenabmessungen zu genügen ist die zweite Übersetzungsstufe dieses bekannten Getriebes als Hypoidradsatz mit Plus-Achsversetzung ausgebildet. Dadurch können insbesondere die Ritzellagerung und die Verzahnung höher belastet werden.

Das Getriebe einschließlich des Antriebsrades ist mittels eines Lagers um eine vertikale Motorachse schwenkbar im Flurförderfahrzeug aufgehängt. Der Innenring des Schwenklagers ist in das obere Gehäuseteil integriert, das zusammen mit dem unteren Gehäuseteil das Getriebegehäuse bildet. Auf der Motorwelle ist das Ritzel einer Stirnradstufe befestigt, wobei das Ritzel mit einem Stirnrad kämmt, das auf dem freien oberen Ende einer zum Hypoidradsatz gehörenden vertikalen Ritzelwelle befestigt ist. Der Verzahnungsbereich des Hypoidritzels befindet sich am freien unteren Ende der Ritzelwelle, die mittels zweier Wälzlager im unteren Gehäuseteil gelagert ist. Das Tellerrad des Hypoidradsatzes ist mittels eines Kraftschlusses (Kegelpreßsitz) drehfest mit einer horizontalen Abtriebswelle verbunden, die im unteren Gehäuseteil gelagert und mit der Felge des Antriebsrades verbunden ist.

Ein Einradtriebwerk, das ebenfalls insbesondere für Flurförderfahrzeuge ausgelegt ist und das aus einem Getriebegehäuse mit mindestens einer Getriebestufe, einem angeflanschten Antriebsmotor und einem getriebenen Laufrad besteht, ist aus der EP-A-1 285 803 bekannt. Um den Bauraum möglichst klein zu halten und die Montage und Demontage zu vereinfachen, ist hierbei vorgesehen, dass das Laufrad unmittelbar mit einem Getrieberad drehfest verbunden ist und dass das Getrieberad drehbar auf einem koaxial innen liegenden Stützelement aufsitzt. Sofern das Getrieberad drehbar auf einem Gehäusezapfen oder einem drehfest gelagerten Wellenzapfen, der in einem Gehäusedurchbruch aufgenommen ist, gelagert ist, kann eine Flanschwelle mit Lagerelementen entfallen, so dass ein einteiliges Gehäuse verwendet werden kann, das weder einen Deckel noch Verschraubungen benötigt. Bei gleicher Getriebebaugröße kann ferner ein größeres Kegelrad eingesetzt werden, das zur unmittelbaren Krafteinleitung auf das Laufrad eingesetzt werden kann.

Das Getriebe selbst ist zweistufig ausgeführt, wobei die erste Getriebestufe mit einer Stirnradverzahnung dem Antriebsmotor zugeordnet ist, während die zweite Getriebestufe mit einer Kegelradverzahnung dem Laufrad zugeordnet ist. Die beiden Getriebestufen sind durch eine im Gehäuse gelagerte Antriebswelle miteinander verbunden, während das Laufrad drehfest mit dem abtriebsseitigen Kegelrad verbunden ist und ein Laufradkranz und/oder das Kegelrad über Lagerelemente gegenüber dem Gehäusezapfen oder Wellenzapfen abgestützt sind. Da sowohl das Stirnrad als auch das Kegelritzel hierbei auf der Antriebswelle vor dem Einbau festsitzend montiert werden können, wird die Einstellung eines guten Tragbildes erhalten sowie eines vorteilhaften Lagerspiels des spiral- und kreisbogen-verzahnten Kegelgetriebes.

Das Gehäuse ist einteilig ausgebildet, wobei eine erste Öffnung zum Antriebsmotor und eine zweite Öffnung zum Laufrad hin vorgesehen ist. Dadurch sollen die Montage und die Demontage des Einradtriebwerks erleichtert werden, wobei die erste Öffnung durch eine Verschraubung mit dem Drehkranzlagerinnenring nach der Montage und die zweite Öffnung durch das Kegelrad und eine einklemmbare Abdeckung verschlossen werden.

Für die erforderliche Justierung der axialen Lage der Kegelritzelverzahnung bzw. des Kegelrades sind Beilagscheiben oder Passscheiben dem Lager entsprechend zuzuordnen.

Dieses bekannte Kegelradgetriebe sowie auch alle anderen herkömmlichen Kegelradgetriebe sind noch mit dem Nachteil behaftet, dass die Kegelradsätze unabhängig von ihrer Ausgestaltung, immer eingestellt werden müssen, das heißt, dass die Toleranzen der einzelnen Bauteile, die die einwandfreie Wirkungsweise des Kegelradsatzes beeinflussen, einschließlich des Kegelradsatzes selbst, derart eingestellt werden müssen, dass der erwünschte Zahneingriff im Hinblick auf das geforderte Tragbild und das Verdrehflankenspiel gewährleistet ist. Zu diesem Zweck sind, wie oben bereits im Zusammenhang mit dem aus der Veröffentlichung EP-A-1 285 803 bekannten Einradantrieb erwähnt, eine Vielzahl von Beilagscheiben oder Passscheiben erforderlich, sowie oftmals auch ein eigener Arbeitsschritt, in dem die nicht bereits vorgefertigten Passscheiben hergestellt werden.

Des weiteren wird es als nachteilig empfunden, dass nicht nur während der Montage ein hoher zeitaufwand für diese Art der Abpassung und den dazugehörigen Messaufwand erforderlich ist, sondern auch die Tatsache, dass der subjektive Einfluss des jeweiligen Monteurs eine Rolle spielt. Aus diesem Grund ist eine große Erfahrung des mit dem Zusammenbau beauftragten Monteurs unabdingbar.

Aufgabe der vorliegenden Erfindung ist es, ein Kegelradgetriebe zu schaffen, das keinerlei Beilagscheiben oder Abpassscheiben mehr für die Justierung während des Zusammenbaus benötigt.

Die Lösung dieser Aufgabe erfolgt mit den im kennzeichnenden Teil des Anspruchs 1 angegebenen Merkmalen; vorteilhafte Ausgestaltungen sind in den Unteransprüchen beschrieben.

Gemäss der Erfindung ist also vorgesehen, dass das Kegelradgetriebe ohne Abpassscheiben, insbesondere für das lenkbare Rad eines Flurförderfahrzeuges, ein einteiliges Gehäuse aufweist zur Aufnahme eines Kegelradsatzes, eines Stirnrades, mehrerer Lagerbohrungen für die Lagerung einer Kegelritzelwelle, eines Lagers in Gestalt eines Unipack-Lagers und eines Verschlussdeckels, wobei der Verschlussdeckel an derjenigen Stelle, an der die senkrechten Lagerbohrungen für die Lagerung der Kegelritzelwelle ausgebildet sind, mit einer Ausbuchtung versehen ist, die es ermöglicht, ein ausreichend dimensioniertes Werkzeug senkrecht in das einteilige Gehäuse zur passgenauen Ausbildung der herzustellenden eng tolerierten Gehäusemasse einzuführen.

Damit wird nicht nur der Vorteil erzielt, dass ein Justieren in Form von Abpassen entfällt, sondern auch eine Verringerung der Anzahl der Bauteile erreicht, sodass ein erheblich einfacherer Aufbau geschaffen wird, der zu einer nicht unerheblichen Kosteneinsparung führt.

Vorzugsweise erfolgt die Ausbildung der Gehäusemasse des Kegelradgetriebes in einer Aufspannung.

Vorteilhafterweise ist die Breitentoleranz des voreingestellten Unipack-Lagers derart eingeschränkt, dass sie zusammen mit dem Einbaumass des Tellerrades in das zulässige Toleranzfenster fällt, das die Verwendung von Abpassscheiben überflüssig macht.

Vorzugsweise ist das Toleranzfenster des Verdrehflankenspiels derart vergrößert, dass bei toleranzgerechter Fertigung der Einzelteile die angestrebten Montagemasse prozesssicher erreichbar sind.

Im Folgenden wird die Erfindung an Hand der Zeichnung näher erläutert, in der ein vorteilhaftes Ausführungsbeispiel dargestellt ist.
Darin zeigen:
- Fig. 1: schematisch einen Schnitt durch das erfindungsgemäße Kegelradgetriebe und
- Fig. 2: eine Draufsicht auf den Verschlussdeckel.

Kegelradgetriebe der eingangs geschilderten Art für Flurförderfahrzeuge sind dem Fachmann gut bekannt, sodass im Folgenden nur die für das Verständnis der Erfindung erforderlichen Teile beschrieben werden.

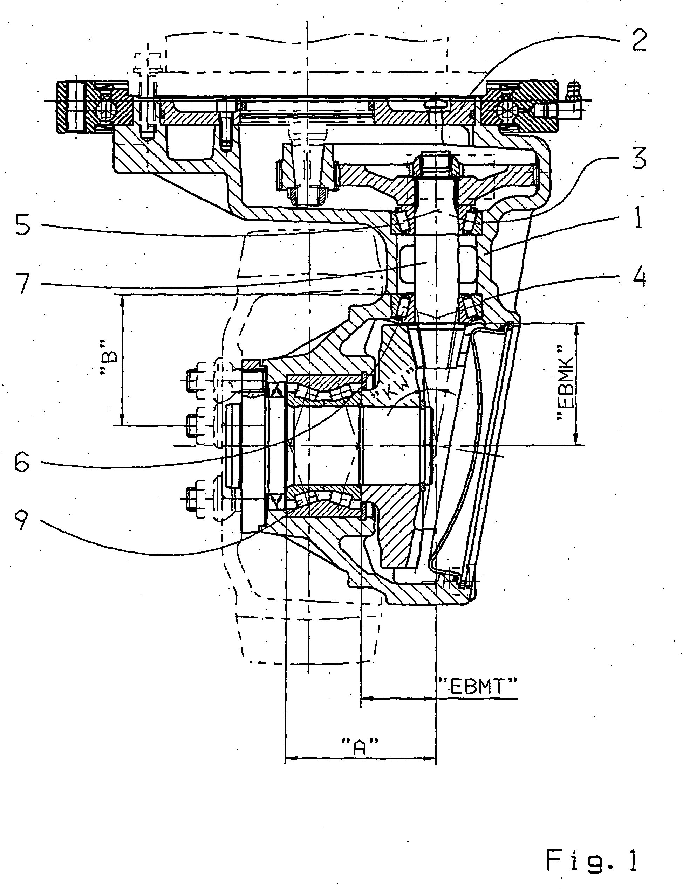

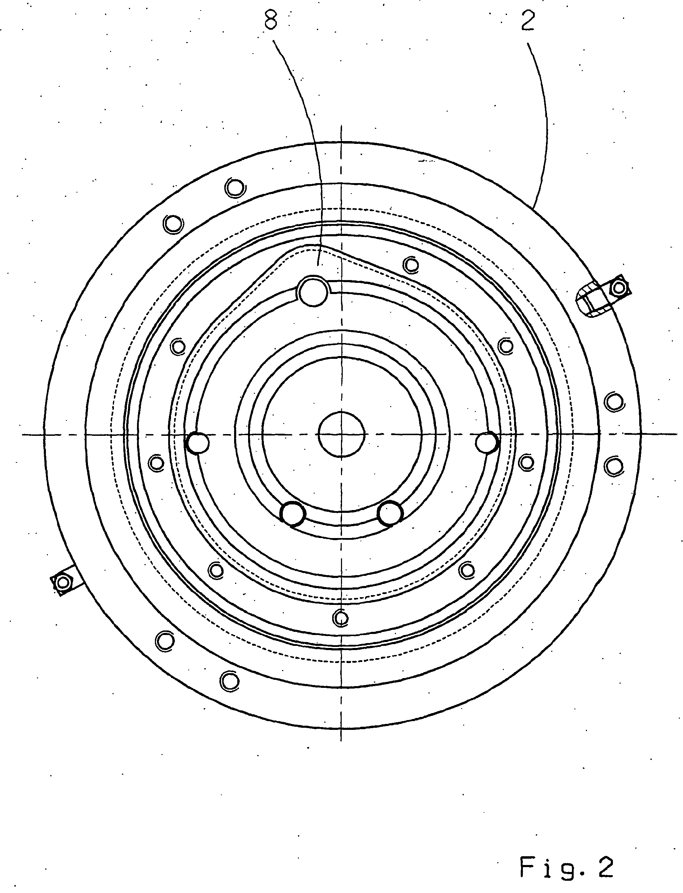

Um die Aufgabe zu lösen, ein Kegelradgetriebe zu schaffen, bei dem kein Abpassen mehr während des Zusammenbaus notwendig ist, wird, wie aus Fig. 1 hervorgeht, ein einteiliges Gehäuse 1 derart ausgestaltet, dass die Gehäusemasse A und B in einer Aufspannung gefertigt werden können. Um dies problemlos zu ermöglichen, wird der Verschlussdeckel 2 derart geformt, dass er an derjenigen Stelle, an der die senkrechten Lagerbohrungen 3, 4 für die Lagerung 5, 6 der Kegelritzelwelle 7 ausgebildet sind, eine Ausbuchtung 8 aufweist, wie aus Fig. 2 ersichtlich ist, die es ermöglicht, ein entsprechendes ausreichend dimensioniertes Werkzeug in das einteilige Gehäuse 1 in senkrechter Richtung einzuführen. Dadurch kann eine hohe Genauigkeit und Prozesssicherheit bei der Ausbildung der auszubildenden eng tolerieren Masse A und B erzielt werden, die notwendig sind um einen nicht mehr einzustellenden Kegelradsatz in dem Gehäuse 1 zu montieren.

Ferner wurde die Breitentoleranz des bereits voreingestellten Lagers 9 das ein Unipack-Lager ist, so weit eingeschränkt, dass sie, zusammen mit dem Einbaumass EBMT des Tellerrades, in das zulässige Toleranzfenster fällt, bei dem ein weiteres abpassen nicht mehr erforderlich ist. Die Lagerbreite des Lagers 6 muss hingegen nicht zusätzlich eingeschränkt werden, da ihr Einfluss zusammen mit demjenigen des Einbaumasses EBMK der Kegelritzelwelle auf das Tragbild und auf das Verdrehflankenspiel auf Grund des geringen Kegelwinkels KW nur gering ist.

Als zusätzliche Maßnahme wurde das Toleranzfenster des Verdrehflankenspiels derart vergrößert, dass bei toleranzgerechter Fertigung der einzelnen Bauteile die vorgegebenen Montagemasse prozesssicher erreicht werden.

Durch die erfindungsgemäße Ausgestaltung des Gehäuses für das Kegelradgetriebe und die damit mögliche Verringerung der Toleranzen wird also ein Kegelradgetriebe erhalten, bei dem kein Abpassen während der Montage erforderlich ist, das weniger Bauteile aufweist, das einfacher im Aufbau ist als die herkömmlichen Kegelradgetriebe und das kostengünstiger zu fertigen ist.

### Bezugszeichen

- 1: Gehäuse
- 2: Verschlussdeckel
- 3: Lagerbohrung
- 4: Lagerbohrung
- 5: Lagerung
- 6: Lagerung
- 7: Kegelritzelwelle
- 8: Ausbuchtung
- 9: Unipack-Lager

## Patentansprüche

1. Kegelradgetriebe ohne Abpassscheiben, für das lenkbare Rad eines Flurförderfahrzeuges, mit einem Gehäuse (1) zur Aufnahme eines Kegelradsatzes, eines Tellerrades, mehrerer Lagerbohrungen (3,4) für die Lagerung einer Kegelritzelwelle (7), und einer Stirnradstufe, welche dem Kegelradsatz vorgeschaltet angeordnet ist und die Kegelritzelwelle (7) antreibt, **dadurch gekennzeichnet, dass** das Tellerrad über ein Unipack-Lager (9) im Gehäuse (1) gelagert ist, dass das Gehäuse (1) einteilig ausgeführt ist und den Kegelradsatz und das Stirnradgetriebe vollständig aufnimmt, wobei das Gehäuse sich über das Stirnradgetriebe hin-aus erstreckt und mit einem Veschlussdeckel (2), welcher die Öffnung des Gehäuses im Bereich des Stirnradgetriebes abdeckt, wobei der Verschlussdeckel (2) an derjenigen Stelle, an der die senkrechten Lagerbohrungen (3, 4) für die Lagerung (5, 6) der Kegelritzelwelle (7) ausgebildet sind, mit einer Ausbuchtung (8) versehen ist, die es ermöglicht, ein ausreichend dimensioniertes Werkzeug senkrecht in das einteilige Gehäuse (1) zur passgenauen Ausbildung der herzustellenden eng tolerierten Gehäusemasse für die Herstellung der Lagerbohrungen der Kegelritzelwelle (A) und (B) einzuführen, wodurch die Lagerbohrung für die Kegelritzelwelle im Gehäuse vollständig in einer Aufspannung hergestellt werden kann.

2. Kegelradgetriebe nach Anspruch 1, **dadurch gekennzeichnet, dass** die Breitentoleranz des voreingestellten Unipack-Lagers (9) derart eingeschränkt ist, dass sie zusammen mit dem Einbaumass (EBMT) des Tellerrades in das zulässige Toleranzfenster fällt, das die Verwendung von Abpassscheiben überflüssig macht.

3. Kegelradgetriebe nach Anspruch 1, oder 2, **dadurch gekennzeichnet, dass** das Toleranzfenster des Verdrehflankenspiels derart vergrößert ist, dass bei toleranzgerechter Fertigung der Einzelteile die angestrebten Montagemasse prozesssicher erreichbar sind.

## Claims

1. Bevel-gear drive without adjusting disk for the steerable wheel of a floor conveyor, with a housing (1) for accommodation of a bevel gear set, a ring gear, several bearing bores (3, 4) for the support of a bevel pinion shaft (7), and a spur gear stage preceding the bevel gear set and driving the bevel pinion shaft (7), **characterized in that** the ring gear is supported in the housing by a unipack bearing (9), that the housing (1) consists of a single piece and completely accommodates the bevel gear set and the spur gear, with the housing extending beyond the spur gear and being provided with a closure cap (2) covering the opening of the housing in the area of the spur gear, with the closure cap (2) featuring a bulge (8) where the vertical bearing bores (3, 4) for the support (5, 6) of the bevel pinion shaft (7) are, with said bulge permitting vertical introduction of a sufficiently dimensioned tool into the single-piece housing (1) for the precise design of the close-tolerance housing mass and the making of the bearing bores of the bevel pinion shaft (A) and (B), with the bearing bores for the bevel pinion shaft in the housing being realizable in a single clamping process.

2. Bevel-gear drive according to claim 1, **characterized in that** the width tolerance of the preset unipack bearing (9) is limited to such an extent that together with the installation dimensions (EBMT) of the ring gear it remains within the tolerance range making the use of adjusting disks superfluous.

3. Bevel-gear drive according to claim 1 or 2, **characterized in that** the tolerance range of the circumferential backlash is enhanced to such an extent that tolerance-compliant production of the individual parts will permit process-safe realization of the assembly dimensions aimed at.

## Revendications

1. Transmission à pignons coniques sans disques de réglage, pour la roue orientable d'un chariot de manutention, doté d'un carter (1) pour le logement d'un train à pignons coniques, d'une couronne, de plusieurs alésages de paliers (3, 4) pour la logement d'un arbre de pignon conique (7), et d'un étage à poignons cylindriques, celui-ci étant disposé en amont du train à pignons coniques et entraînant l'arbre du pignon conique (7), **caractérisée en ce que** la couronne est logée à l'aide d'un palier unipack (9) dans le carter, **en ce que** le carter (1) est réalisé en une seule pièce et dans lequel sont logés complètement le train à pignons coniques et la transmission à pignons cylindriques, sachant que le carter s'étend au-delà de la transmission à pignons cylindriques et qu'il est pourvu d'un couvercle de fermeture (2) couvrant l'orifice du carter dans la zone de la transmission à pignons cylindriques, sachant que le couvercle de fermeture (2) est doté - à l'endroit où sont réalisés les alésages des paliers verticaux (3, 4) pour le logement (5, 6) de l'arbre du pignon conique (7) - d'une découpe (8), celle-ci permettant d'introduire un outil de dimensions adéquates et perpendiculairement dans le carter réalisé en une seule pièce (1) pour la réalisation précise des cotes de carter étroitement tolérées permettant la réalisation des alésages de paliers de l'arbre du pignon conique (A) et (B), d'où la possibilité de pouvoir réaliser dans le carter l'alésage de palier pour l'arbre du pignon conique et cela complètement dans une seule opération.

2. Transmission à pignons coniques selon la revendication 1 , **caractérisée en ce que** la tolérance de largeur du palier unipack préréglé (9) est limitée de façon à ce que - conjointement avec la cote de montage (EBMT) de la couronne - elle rentre dans la plage de tolérances admissible rendant inutile l'utilisation de disques de réglage.

3. Transmission à pignons coniques selon la revendication 1 ou 2, **caractérisée en ce que** la plage de tolérances du battement circonférentiel est augmenté de façon à ce que en cas d'usinage des pièces détachées en respectant les tolérances prescrites il sera possible d'atteindre les cotes de montage visées en garantissant la sécurité de process.
